# EUROPÄISCHE PATENTSCHRIFT

(11) **EP 2 459 895 B1**
(45) Veröffentlichungstag und Bekanntmachung des Hinweises auf die Patenterteilung: **14.11.2012**
(21) Anmeldenummer: 09736160.4
(22) Anmeldetag: 24.09.2009
(51) Int. Cl.: F16D 23/02

(54) **SYNCHRONRINGPAKET**
SYNCHRONIZING RING ASSEMBLY
ENSEMBLE DE BAGUES DE SYNCHRONISATION

(43) Veröffentlichungstag der Anmeldung: 06.06.2012
(73) Patentinhaber: Otto Fuchs KG, 58540 Meinerzhagen (DE)
(72) Erfinder: MÜNSTER, Jürgen, 21509 Glinde (DE); GUMMERT, Hermann, 41749 Viersen (DE); RECHTERN, Hans-Jürgen, 58540 Meinerzhagen (DE)
(74) Vertreter: Haverkamp, Jens
(86) Internationale Anmeldenummer: PCT/EP2009/062381
(87) Internationale Veröffentlichungsnummer: WO 2011/035806

(56) Entgegenhaltungen:
- WO-A1-2009/027453
- FR-A1- 2 692 506
- FR-A1- 2 775 744
- GB-A- 2 391 592

## Beschreibung

Die Erfindung betrifft ein Synchronringpaket, umfassend wenigstens zwei Synchronringe, welche wenigstens zwei Synchronringe über jeweils eine Reibfläche verfügen, die zur Ausbildung einer Reibpaarung in Wirkverbindung miteinander stellbar sind, wobei einer der wenigstens zwei Synchronringe aus einem Stahlwerkstoff und der andere Synchronring aus einem Messingwerkstoff gefertigt sind. Ferner betrifft die Erfindung ein Verfahren zum Ausbilden der Reibbeläge eines zwei konzentrisch zueinander angeordnete Reibbeläge aufweisenden Synchronringes.

Bei synchronisierten Schalt- oder Wechselgetrieben werden die kraftschlüssig miteinander bei einem Gangwechsel zu verbindenden Wellen vor Herstellen des Kraftschlusses hinsichtlich ihrer Rotationsgeschwindigkeit synchronisiert. Zu diesem Zweck sind die einzelnen Gänge derartiger Getriebe einfach oder mehrfach synchronisiert. Zum Herstellen der Synchronisierung - des Gleichlaufes - werden Synchronringe verwendet. Diese verfügen jeweils über eine Reibfläche, die zum Herstellen der gewünschten Synchronisierung beispielsweise auf das Gangrad als Gegenkörper wirkt. Bei einer Mehrfachsynchronisierung wirken einzelne Synchronringe gegeneinander. Der Gegenkörper, bei einer Mehrfachsynchronisierung beispielsweise ein weiterer Synchronring, verfügt zu diesem Zweck ebenfalls über eine Reibfläche. Beide Elemente sind in axialer Richtung gegeneinander verstellbar. Der Gleichlauf wird durch Andrücken der beiden eine Reibpaarung bildenden Reibflächen bewirkt, und zwar durch Herstellen eines Reibschlusses. Da sich die Einzelelemente eines solchen Synchronringpaketes in einer Ölumgebung befinden, ist es zum Herstellen des gewünschten Reibschlusses notwendig, den zwischen den Reibflächen einer Reibpaarung befindlichen Ölfilm zu durchbrechen. Zu diesem Zweck verfügt wenigstens eine Reibfläche einer Reibpaarung typischerweise über Ölnuten. Diese verlaufen in aller Regel in axialer Richtung. Ferner sind bei Messingwerkstoffsynchronringen Reibflächen bekannt, die eine Gewindeoberfläche aufweisen.

In DE 20 2005 035 941 B3 ist ein Synchronringpaket mit drei Synchronringen beschrieben. Dieses aus einem äußeren Synchronring, einem Zwischenring und einem inneren Synchronring bestehende Synchronringpaket zeichnet sich dadurch aus, dass der äußere Synchronring und der Zwischenring jeweils aus einem Stahlwerkstoff und der innere Synchronring aus einem Kupferwerkstoff, beispielsweise einem Messingwerkstoff gefertigt sind. Die Reibfläche des Messingwerkstoffsynchronringes kann zum Ausbilden der Reibfläche ein Reibgewinde oder einen Reibbelag tragen. Mit diesem wirkt der Messingwerkstoffsynchronring einerseits gegen die komplementäre Reibfläche des Zwischenringes und andererseits innenseitig gegen das Gangrad.

Die beiden Reibflächen einer Reibpaarung müssen einen bestimmten Reibbeiwert aufweisen, damit eine Synchronisierung bestimmungsgemäß herbeigeführt werden kann. Die Reibflächen von Stahlwerkstoffringen sind zu diesem Zweck geschliffen und gehont. Dabei sind diese Bearbeitungsschritte in einer Art und Weise auszuführen, dass die Reibfläche eine gewisse Restrauhigkeit aufweist. Aufgrund der relativ höheren Härte von Stahlwerkstoffreibflächen gegenüber Messingwerkstoffreibflächen sind die Reibflächen bei Messingwerkstoffsynchronringen oftmals mit einem Reibbelag versehen. Über die Lebensdauer eines solchen Synchronringpaketes kann sich der Reibbeiwert einer solchen Reibpaarung durch das gegenseitige Glätten der Reibflächen erniedrigen mit der Folge, dass zum Herbeiführen einer Synchronisierung ein höherer axialer Druck auf die Reibpaarung ausgeübt werden muss. Bei Reibpaarungen, bei denen ein Messingsynchronring als Reibfläche ein Gewinde trägt und bei der die komplementäre Reibfläche von einem Stahlwerkstoffsynchronring bereitgestellt wird, ändert sich aufgrund einer Reduzierung der Gewindehöhe mit ihren zueinander geneigten Flanken zudem die Kontaktfläche im Zuge des Verschleißes der Reibfläche des Messingwerkstoffsynchronringes. Auch dieses wirkt sich auf den Synchronisationsvorgang aus.

Bei Synchronringpaketen mit einem zwischen zwei äußeren Synchronringen befindlichen Zwischenring ist dieser, wenn es sich um einen Zwischenring aus einem Messingwerkstoff handelt, zur Ausbildung seiner Reibflächen beidseitig mit einem Reibbelag beschichtet. Das Aufbringen derartiger Reibbeläge erfolgt in der Regel durch Aufkleben einzelner Reibbelagabschnitte auf die entsprechend vorbehandelten Reibbelagflächen des Synchronringes. Der Herstellungsaufwand zum Herstellen eines solchen Zwischenringes mit zwei durch Reibbeläge bereitgestellten Reibflächen, die jeweils einer unterschiedlichen Reibpaarung zugehörig sind, ist daher entsprechend aufwendig.

Ein eingangs genannter Synchronring mit den Merkmalen des Oberbegriffs des Anspruchs 1 ist aus GB 2,391,592 A bekannt.

Aus FR 2,775,744 A1 ist ein Synchronring aus einem Messingwerkstoff bekannt, bei dem die Reibfläche mit Ausnahme von gegebenenfalls vorhandenen, sich in axialer Richtung erstreckenden Ölnuten glatt ist. Der Synchronring weist zumindest in seinem die Reibfläche bildenden Abschnitt ein Gefüge auf, bei dem in einem kristallinen Grundmaterial geringerer Härte Partikel höherer Härte eingelagert sind.

WO 2009/027453 A1 offenbart eine Reibpaarung. Dabei ist vorgesehen, dass der Reibbelag eines Stahlwerkstoffsynchronringes aus einem organischen Bindemittel mit darin eingelagerten Füllstoffpartikeln gebildet ist, wobei die Füllstoffpartikel eine höhere Härte aufweisen als das Bindemittel. Dieses Reibfläche kontaktiert bei der Reibpaarung eine unstrukturierte Gegenfläche eines herkömmlichen Gegenkörpers.

Ausgehend von diesem diskutierten Stand der Technik liegt der Erfindung daher die Aufgabe zugrunde, ein eingangs genanntes Synchronringpaket dergestalt weiterzubilden, dass über die Lebensdauer eines solchen Synchronringpaketes die zumindest eine darin enthaltene Reibpaarung nicht nur einen gleichbleibenden Reibbeiwert, sondern auch im übrigen ein über die Lebensdauer gleiches Synchronisierungsverhalten aufweist.

Gelöst wird die sich auf das Synchronringpaket beziehende Aufgabe durch ein eingangs genanntes gattungsgemäßes Synchronringpaket, bei dem die Reibfläche des Messingwerkstoffsynchronringes mit Ausnahme von gegebenenfalls vorhandenen, sich in axialer Richtung erstreckenden Ölnuten glatt ist und der Messingwerkstoffsynchronring zumindest in seinem die Reibfläche bildenden Abschnitt ein Gefüge aufweist, bei dem in einem kristallinen Grundmaterial geringerer Härte Partikel höherer Härte eingelagert sind, und die zu dieser Reibfläche komplementäre Reibfläche der Reibpaarung des Stahlwerkstoffsynchronringes durch einen Reibbelag aus einem organischen Bindemittel mit darin eingelagerten Füllstoffpartikeln gebildet ist, wobei die Füllstoffpartikel eine höhere Härte aufweisen als das Bindemittel.

Bei diesem Synchronringpaket sind die beiden Reibflächen einer Reibpaarung zwischen einem Messingwerkstoffsynchronring und einem Stahlwerkstoffsynchronring dergestalt ausgebildet, dass sich die für den Reibbeiwert relevanten Oberflächencharakteristika der Reibflächen über die Lebensdauer des Synchronringpaketes innerhalb der vorgegebenen Toleranzgrenzen nicht verändern. Der Grund hierfür liegt in der Materialbeschaffenheit der die jeweilige Reibfläche bildenden Abschnitte zweier eine Reibpaarung bildenden Reibflächen. Bei der zumindest einen Reibpaarung dieses Synchronringpaketes ist die Materialbeschaffenheit der beiden Reibflächen dergestalt, dass in einem weicheren Grundmaterial Partikel höherer Härte eingelagert sind. Zu diesem Zweck wird bei dem Stahlwerkstoffsynchronring als Reibbelag ein organischer Reibbelag eingesetzt, aufgebaut aus einem organischen Bindemittel mit darin eingelagerten, eine höhere Härte aufweisenden Partikeln als Füllstoff. Bei diesen Partikeln handelt es sich vorzugsweise um Kurzfasern, insbesondere Carbonfasern. Die mit der Reibfläche dieses Reibbelages zusammenwirkende Reibfläche des Messingwerkstoffsynchronringes verfügt über in einem kristallinen Grundmaterial geringerer Härte eingelagerte Partikel höherer Härte. Bevorzugt wird eine derartige Messinglegierung verwendet und der Messingwerkstoffsynchronring mit einem entsprechend angepassten Verfahren daraus hergestellt, dass sich im Zuge des Herstellungsverfahrens als Partikel höherer Härte Silizide, beispielsweise Mn-Fe-Silizide und/oder Ni-Co-Silizide ausbilden. Diese sind ebenso wie der Kurzfaserfüllstoff in dem Grundmaterial des Belages des Stahlwerkstoffsynchronringes dispers verteilt. Die in der Messinglegierung enthaltenen und gegenüber der Grundmasse härteren Partikel, beispielsweise die vorgenannten Silizide weisen eine höhere Härte auf als das Bindemittel des mit der Reibfläche des Messingwerkstoffsynchronringes zusammenwirkenden, durch einen Reibbelag gebildeten Reibfläche des Stahlwerkstoffsynchronringes. Grundsätzlich können auch die in dem Reibbelag eingelagerten härteren Füllstoffpartikel eine größere Härte aufweisen als die Matrix des zur Ausbildung der Reibfläche des Messingwerkstoffsynchronringes eingesetzten Messinglegierung. Bei einem Betrieb der Reibpaarung zum Angleichen der Drehgeschwindigkeiten der beiden Synchronringe ändert sich auch mit zunehmendem Verschleiß aufgrund der eingelagerten härteren Partikel der Reibbeiwert nicht. Vielmehr tragen die härteren Partikel dafür Sorge, dass unabhängig von einem bereits eingetretenen Verschleiß der Reibflächen diese eine gleichbleibende Rauhigkeit aufweisen. Die Rauhigkeit stellt sich durch den Härtekontrast zwischen den eingelagerten härteren Partikeln und dem diese Partikel umgebenden und gegenüber diesen relativ weicheren Grundmaterial ein. Da die härteren Partikel nicht nur bezüglich der Oberfläche der Reibfläche sondern auch im Hinblick auf die Tiefe der Reibschicht verteilt sind, bleiben die vorstehend beschriebenen Eigenschaften der Reibflächen über die Lebensdauer einer solchen Reibpaarung bestehen.

Ein Synchronringpaket mit drei Synchronringen wird zweckmäßigerweise dergestalt zusammengestellt, dass dieses zwei Messingwerkstoffsynchronringe und einen Stahlwerkstoffsynchronring umfasst, wobei der Stahlwerkstoffsynchronring der Zwischenring ist. Die beiden Reibpaarungen dieses Synchronringpaketes sind aufgebaut, wie dieses vorstehend beschrieben ist. Dieses impliziert, dass der Stahlwerkstoffzwischenring an seinem zwischen die Reibfläche des innenliegenden Messingwerkstoffringes und dem außenliegenden Messingwerkstoffring ragenden Ringabschnitt beidseitig einen Reibbelag zur Ausbildung der beiden Reibflächen trägt. Die beiden Reibbeläge sind vorzugsweise in einem Spritzguss- oder Spritzpressverfahren auf die zum Tragen der Reibbeläge vorgesehenen Ringabschnittsflächen dieses Zwischenringes aufgebracht. Dieser Synchronring verfügt über Durchbrechungen in seinem Ringabschnitt, so dass der Anguß von nur einer Seite aus erfolgen kann. Entsprechend einfacher ist die diesbezügliche Werkzeugkonzeption. Die Durchbrechungen tragen Sorge dafür, dass die zugeführte fließfähige, noch nicht ausgehärtete Reibbelagmasse sich in der Kavität des Werkzeuges unter Ausnutzung der durch die Durchbrechungen des Werkstückes geschaffenen Wegsamkeiten auf beide Seiten des Ringabschnittes gelangen kann. Verfügt der Zwischenring über Durchbrechungen in Form von Aussparungen an dem freien Ende seines Ringabschnittes, kann der Anguß von dieser Stirnseite erfolgen. Von Vorteil ist bei einem solchen Anguß, dass verbleibende Angußmarkierungen sich nicht auf der Reiboberfläche befinden. Ein Anguß von der freien Stirnseite des Ringabschnittes ist auch ohne Durchbrechungen möglich, jedoch ist ein Abdichten des Synchronringes in dem Spritzguss- oder Spritzpresswerkzeug an seiner Stirnseite einfacher zu realisieren, wenn die die Durchbrechungen einfassenden Stege des Ringabschnittes gegen eine Werkzeugwand grenzen.

Nachfolgend ist die Erfindung anhand eines Ausführungsbeispiels unter Bezugnahme auf die beigefügten Figuren beschrieben. Es zeigen:
- **Fig. 1:**: Eine Querschnittsdarstellung der einzelnen Synchronringe eines beispielhaft dargestellten Synchronringpaketes,
- **Fig. 2:**: einen Anschliff der Reibfläche des aus einem Messingwerkstoff hergestellten äußeren Synchronringes,
- **Fig. 3:**: die Synchronringe der Figur 1 in ihrer Zusammenstellung als Synchronringpaket und
- **Fig. 4:**: einen vergrößerten Ausschnitt eines Schnittes durch den inneren Reibbelag des Zwischenringes des Synchronringpaketes der Figur 3.

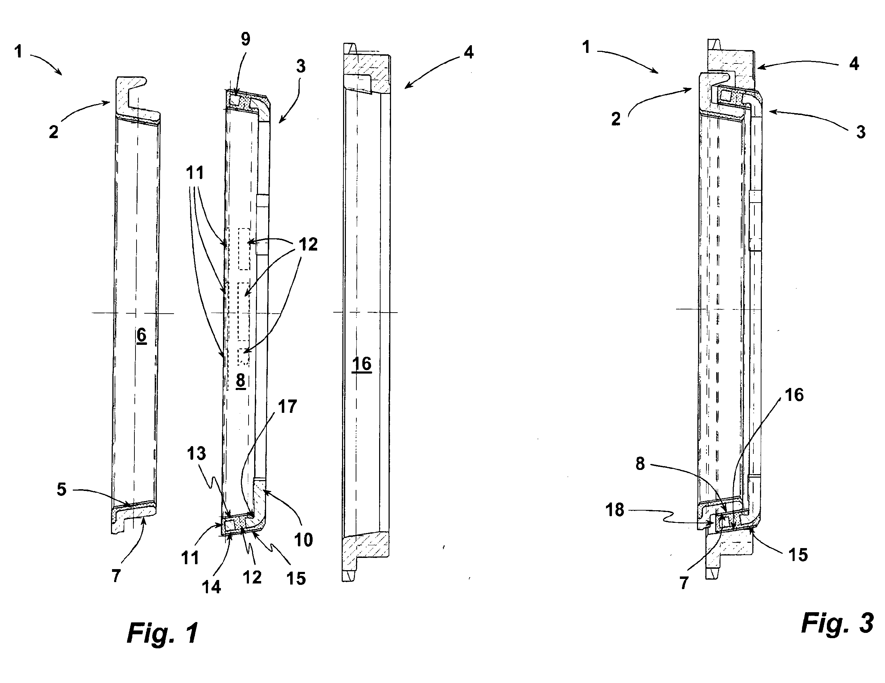

Ein Synchronringpaket 1 ist bei dem dargestellten Ausführungsbeispiel aus drei einzelnen Synchronringen 2, 3, 4 zusammengesetzt. Bei dem Synchronring 2 handelt es sich um den innenliegenden Synchronring. Der Synchronring 3 ist der Zwischenring. Der Synchronring 4 ist in dem Synchronringpaket 1 der außenliegende Synchronring. Der innenliegende Synchronring 2 und der außenliegende Synchronring 4 sind aus einem Messingwerkstoff hergestellt, und zwar bei dem dargestellten Ausführungsbeispiel im Wege eines Schmiedeprozesses. Im Wege eines Spritzgussverfahrens ist die innenliegende konische Mantelfläche 5 des Synchronringes 2 mit einem Reibbelag 6 beschichtet. Die äußere Reibfläche 7 des Messingwerkstoffsynchronringes 2 ist dagegen unbeschichtet. Die Reibfläche 7 bildet die eine Reibfläche einer ersten Reibpaarung des Synchronringpaketes 1. Die Reibfläche 7 wirkt zusammen mit einer ersten Reibfläche 8 des Stahlwerkstoffsynchronringes 3. Der Stahlwerkstoffsynchronring 3 ist ein tiefgezogener Formkörper, hergestellt aus einem Stahlblech. Der Stahlwerkstoffsynchronring 3 verfügt über einen konischen Ringabschnitt 9, an den an seinem verjüngten Ende in radialer Richtung nach innen vorspringend ein Flanschabschnitt 10 angeformt ist. Über den Umfang gesehen ist die radiale Erstreckung des Flanschabschnittes 10 ungleich. Der Ringabschnitt 9 verfügt über Durchbrechungen 11, 12. Die Durchbrechungen 11 des Ringabschnittes 9 befinden sich an dem freien, zu dem Synchronring 2 weisenden Ende. Die Durchbrechungen 11 sind in der Querschnittsdarstellung erkennbar. Die Durchbrechungen 12 sind etwa im mittleren Abschnitt des Ringabschnittes 9 eingebracht. Die Durchbrechungen 11, 12 sind mit gleichem Winkelabstand über den Umfang des Ringabschnittes 9 angeordnet. Zur Verdeutlichung sind in Figur 1 gestrichelt einige weitere der umfänglich verteilt angeordneten Durchbrechungen 11, 12 gezeigt. Der Ringabschnitt 9 ist beidseitig mit einem Reibbelag 13, 14 beschichtet. Der innenliegende Reibbelag 13 bildet die Reibfläche 8 der bereits vorstehend beschriebenen ersten Reibpaarung mit dem Synchronring 2. Der außenliegende Reibbelag 14 bildet die außenliegende Reibfläche 15, die wiederum mit einer unbeschichteten Reibfläche 16 des äußeren Synchronringes 4 zum Ausbilden einer zweiten Reibpaarung zusammenwirkt. Der Stahlwerkstoffsynchronring kann auch auf andere Weise hergestellt werden, etwa durch Sintern oder durch eine Drehbearbeitung.

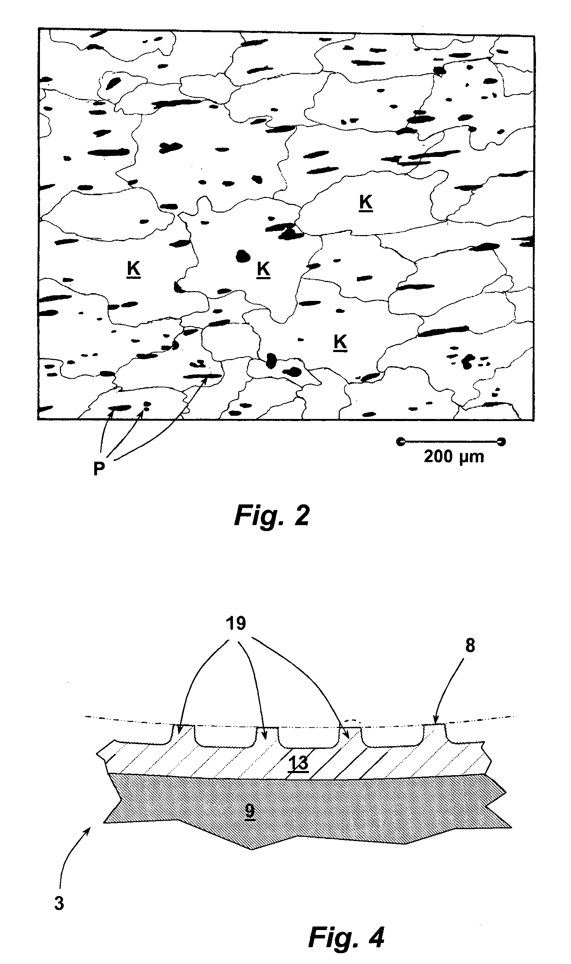

Die Durchbrechungen 11, 12 des Stahlwerkstoffsynchronringes dienen dem Zweck, damit bei den im Wege eines Spritzgussverfahrens auf die konzentrisch zueinander angeordneten Mantelflächen des Ringabschnittes 9 aufgebrachten Reibbelägen 13, 14 der Anguß von einer Seite erfolgen kann. Die Durchbrechungen 11, 12 tragen Sorge dafür, dass innerhalb der Kavität eines entsprechenden Spritzgusswerkzeuges die zugeführte Reibbelagmasse bestimmungsgemäß einfließen und sich verteilen kann. Somit dienen die Durchbrechungen 11, 12 als Wegsamkeit zum Verteilen der Reibbelagmasse mit der Folge, dass das Spritzgusswerkzeug entsprechend einfacher ausgebildet sein kann. Zudem bietet dieses die Möglichkeit, die Reibflächen 8, 15 durch die Werkzeugwandungen auszubilden. Nachbearbeitungen sind daher grundsätzlich nicht erforderlich. In die Reibflächen 8, 15 sind, wie nachstehend zu Figur 4 beschrieben, der Längserstreckung des Synchronringes 3 folgende Ölnuten eingebracht. An den für die Ausbildung der Ölnuten vorgesehenen Positionen verfügt das verwendete Spritzgusswerkzeug über entsprechende Stege. Damit erfolgt das Strukturieren der Reibfläche durch die Ölnuten beim Erstellen der Reibbeläge. Im Übrigen sind die Reibflächen 8, 15 glatt. Wenn der Anguß von der freien Stirnseite des Ringabschnittes 9 her in axialer Richtung erfolgt, befinden sich Angußmarkierungen, wobei der Anguß beispielsweise im Wege eines Sternangusses erfolgen kann, nicht auf einer der Reibflächen 8 oder 15. Gleichwohl ist auch ein Anguß, insbesondere ein Sternanguß von der Außenseite her möglich.

Die Durchbrechungen 11, 12 dienen auch zum Herbeiführen eines Formschlusses zwischen der die Reibbeläge 13, 14 bildenden Reibbelagmasse und dem Ringabschnitt 9 bzw. dem Synchronring 3. Durch die Durchbrechungen 12 ist die Reibbelagmasse formschlüssig in axialer Richtung und in Drehrichtung an dem Ringabschnitt 9 verklammert. Durch die Durchbrechungen 11 ist die Reibbelagmasse in Rotationsrichtung formschlüssig an dem Ringabschnitt 9 verklammert. Bei dem dargestellten Ausführungsbeispiel ist im inneren Übergang zwischen dem Flanschabschnitt 10 und dem Ringabschnitt 9 eine Einschnürung 17 ausgebildet. Die Einschnürung 17 ist ebenfalls mit Reibbelagmasse verfüllt. Gleichfalls ist Sorge dafür getragen, dass der äußere Reibbelag 14 sich bis in den Übergang zwischen dem Ringabschnitt 9 und dem Flanschabschnitt 10 erstreckt und dadurch den Ringabschnitt 9 hintergreift. Durch diese beiden Maßnahmen ist die Reibbelagmasse bzw. die durch diese gebildeten Reibbeläge 13, 14 zusätzlich in axialer Richtung formschlüssig an dem Stahlwerkstoffsynchronring 3 verklammert. Dieses macht deutlich, dass zum Herbeiführen eines in axialer Richtung wirkenden Formschlusses die in den Ringabschnitt 9 eingebrachten Durchbrechungen 12 nicht zwingend erforderlich sind.

Das Verbinden der beiden Reibbeläge 13, 14 durch die in den Durchbrechungen 11, 12 befindliche Reibmasse gewährleistet eine mechanische Anbindung der Reibbelagmasse an den Ringabschnitt 9 des Synchronringes 3. Dieses gilt insbesondere für die Verbindung der Reibbeläge 13, 14 durch das in den Durchbrechungen 11 befindliche Reibbelagmaterial, wodurch ein Aufblättern des Reibbelages von diesem freien Ende her wirksam vermieden ist.

Der eigentliche Vorgang des Spritzgießens oder Spritzpressens zum Auftragen der Reibbeläge 13, 14 sowie des Reibbelages 6 des innenliegenden Synchronringes erfolgt vorzugsweise mit dem in DE 10 2007 041 218.7 beschriebenen Verfahren, wobei durch diese explizite Bezugnahme auf diese ältere Patentanmeldung der Anmelderin auch deren Offenbarungsgehalt vollumfänglich zum Gegenstand dieser Beschreibung gemacht wird.

Die Reibbelagmasse zum Ausbilden der Reibbeläge 13, 14 ist organischer Natur. Diese umfasst ein organisches Bindemittel, beispielsweise einen Duroplasten, in dem als Füllstoff u. a. Kurzfasern enthalten sind. Die Kurzfasern weisen eine höhere Härte auf als die Grundmasse. Typischerweise werden als Füllstoffe Carbonkurzfasern, typischerweise durch Mahlen erzeugt, verwendet. Bei dem dargestellten Ausführungsbeispiel weisen die Carbonkurzfasern eine durchschnittliche Länge von 0,1 mm auf. Der Reibbelag 6 des Messingwerkstoffsynchronringes 2 weist eine entsprechende Zusammensetzung auf. Eine Verwendung von Kurzfasern als Füllstoffpartikel gemeinsam mit gegebenenfalls vorhandenen anderen Füllstoffen ist bei einem Aufbringen der Reibbeläge im Wege eines Spritzguss- oder Spritzpressverfahrens zweckmäßig. Bei einem Einsatz von Kurzfasern als Füllstoffpartikel können grundsätzlich auch solche anderer Länge eingesetzt werden.

Die Reibfläche 16 des Messingwerkstoffsynchronringes 4 ist in einem Ausschnitt in einem nachgezeichneten Anschliff in Figur 2 dargestellt. Der Anschliff zeigt, dass in die kristalline Matrix (Grundmaterial), dessen kristalline Struktur durch Darstellung der einzelnen Kristalle K erkennbar ist, schwarz gezeichnete Partikel P vorhanden sind. Die Härte der Partikel P ist höher als die Härte der die Grundmasse bildenden Kristalle K. Bei den Partikeln handelt es sich bei dem dargestellten Ausführungsbeispiel um Mn-Fe-Silizide, die - wie aus Figur 2 erkennbar - in der Matrix dispers verteilt eingelagert sind. Zum Erzielen einer solchen Gefügestruktur wurde eine Messinglegierung des Typs CuZn37Mn3Al2PbSi eingesetzt und zum Erstellen des gezeigten Gefüges des Synchronringes 4 verarbeitet, dass die Partikel P (hier: Mn-Fe-Silizide) sich als Ausscheidungsphasen bilden. Dabei ist vorgesehen, dass der Flächenanteil der Silizide mehr als 2%, insbesondere mehr als 3% und vorzugsweise nicht mehr als 10% beträgt. Bei dem dargestellten Ausführungsbeispiel nehmen die Partikel P einen Flächenanteil von etwa 3,9% ein. In Abhängigkeit von der eingesetzten Messinglegierung können sich neben den Mn-Fe-Siliziden oder anstelle von diesen auch andere Silizide bilden, etwa Ni-Co-Silizide.

Figur 3 zeigt das Synchronringpaket 1 mit den bestimmungsgemäß ineinander angeordneten Synchronringen 2, 3, 4. Diese Darstellung macht deutlich, dass die äußere Reibfläche 7 des inneren Synchronringes 2 (Messingwerkstoff) und die innere Reibfläche 8 des Zwischenringes 3 (Stahlwerkstoff) die erste Reibpaarung und die Reibfläche 15 des Zwischenringes 3 mit der Reibfläche 16 des äußeren Synchronringes 4 (Messingwerkstoff) die zweite Reibpaarung bilden. Erkennbar handelt es sich bei dem Synchronringpaket 1 um ein solches, welches als Smith-Synchronisierung ausgebildet ist. Gleichfalls wird aus Figur 3 deutlich, dass im Falle eines Angusses der Reibbelagmasse zum Ausbilden der Reibbeläge 13, 14 des Stahlwerkstoffsynchronringes 3 von der freien Endseite des Ringabschnittes 9 an dieser Stirnseite 18 gegebenenfalls vorhandene Angußmarkierungen nicht stören und daher nach dem Gussprozess auch nicht beseitigt werden müssen.

Die beiden Reibflächen 7, 8 bzw. 15, 16 jeder Reibpaarung sind bei dem Synchronringpaket 1 hinsichtlich ihrer Eigenschaften wie vorstehend beschrieben hinsichtlich ihrer Gefügeeigenschaften gleich aufgebaut. Beide Reibflächen einer Reibpaarung bestehen aus einer Grundmasse mit einer geringeren Härte und darin eingelagerten Partikeln mit einer gegenüber der Härte der Grundmasse höheren Härte. Durch die Wahl der Partikel und/oder deren Anteil an der Ausbildung der Reibfläche kann der Reibbeiwert mit einfachen Mitteln eingestellt werden. Daher kann der Reibbeiwert in einer großen Variabilität eingestellt werden. Zudem arbeiten die beiden Reibflächen einer Reibpaarung aufgrund der geschilderten Eigenschaften "selbstschärfend", da im Zuge der rotatorischen Gegeneinanderbewegung der Reibflächen auch bei einem nicht vermeidbaren Verschleiß derselben durch die jeweils andere Reibfläche regelmäßig härtere Partikel herausgearbeitet werden. Der Reibbeiwert bleibt daher über die Lebensdauer der Synchronringe bzw. des Synchronpaketes 1 konstant. Insbesondere ist nicht zu befürchten, dass im Zuge einer Benutzung des Synchronringpaketes 1 eine Reibfläche die andere glättet und dadurch der Reibbeiwert einer oder beider Reibpaarungen sukzessive erniedrigt wird.

Figur 4 zeigt einen vergrößerten Ausschnitt des innenliegenden Reibbelages 13 des Synchronringes 3. Zum Ausbilden von Öl durchbrechenden Strukturen ist die Oberfläche des Belages 13 durch eine Mikrostruktur strukturiert. Diese Mikrostruktur kann grundsätzlich ohne eine Nachbearbeitung nach dem vorbeschriebenen Verfahren hergestellt werden. Schärfere Kanten lassen sich ausbilden, wenn die vorbeschriebene Mikrostrukturen einer einem abtragenden Nachbearbeitungsschritt unterworfen werden. In einem solchen Fall werden die Mikrostrukturen mit einer gewissen Vorgabe geformt und anschließend, beispielsweise durch eine Drehbearbeitung abgetragen. In Figur 4 ist auf dem zweiten Reibkörper 19 von rechts gesehen seine ursprüngliche Erstreckung gezeigt, ohne nachfolgenden abtragenden Bearbeitungsschritt. Es versteht sich, dass bei einer solchen Vorgehensweise die Form, an der der Reibbelag zur Ausbildung der Reibkörper geformt wird, weniger konturgenau und daher mit einem größeren Radius an den Kanten vorgesehen sein kann. Schließlich erfolgt bei dieser Ausgestaltung das Einstellen der Schärfe der Kanten erst durch den nachfolgenden Reibbelag abtragenden Bearbeitungsschritt.

Die Mikrostrukturierung ist gebildet durch einzelne Reibkörper 19, deren von dem Ringabschnitt 9 wegweisende Oberseite glatt ist und wobei die die Reibkörper 19 verbindende Mantelfläche die Reibfläche 8 des Reibbelages 13 bildet. Die Reibkörper 19 sind umfänglich mit gleichem Winkelabstand zueinander verteilt angeordnet. Da es sich bei dem Reibbelag 13 um einen innenliegenden Belag handelt, sind die Oberseiten der Reibkörper 19 konkav gekrümmt, und zwar in einem solchen Radius, der der Krümmung der Reibfläche 7 des innenliegenden Synchronringes 2 entspricht. Die die Oberseiten der Reibkörper 13 bildenden Kanten dienen dem Zweck, dass bei dem Vorgang des Herstellens eines Gleichlaufes mit dem Synchronring 2 der zwischen den Reibflächen 7, 8 befindliche Ölfilm abgestreift wird. Die Dicke des Reibbelages 13 beträgt bei dem dargestellten Ausführungsbeispiel 0,8 mm. Die Breite der Reibkörper beträgt 0,3 mm. Die Reibfläche 15 des außenliegenden Reibbelages 14 des Synchronringes 3 ist in gleicher Weise mit einer Mikrostrukturierung zum Zwecke des Ölabstreifens strukturiert.

Die Erläuterung des Stahlwerkstoffsynchronringes lässt erkennen, dass dieser insbesondere mit seinen beiden Reibbelägen und deren Strukturierung zum Ausbilden der Reibflächen ohne größeren Kostenaufwand herstellbar ist.

Die Beschreibung der Erfindung macht deutlich, dass sich die Ausführungen nicht nur auf die konkret in der Beschreibung angegebenen Gefügezusammensetzungen bezieht, sondern dass anstelle der im Wege eines Beispieles genannten Füllstoffe bei den Reibbelägen auch andere mit denselben Eigenschaften verwendet werden können. Gleichfalls können anstelle der genannten Silizide auch andere Ausscheidungsphasen als Einlagerungen erzeugt werden.

Überdies wird deutlich, dass die zu den Reibpaarungen beschriebenen Eigenschaften des gleichmäßigen Verschleißes ohne Änderung der Eigenschaften der daran beteiligten Reiboberflächen auch für andere Reibpaarungen geeignet sind.

### Bezugszeichen liste

- 1: Synchronringpaket
- 2: Synchronring (Messingwerkstoff)
- 3: Synchronring (Stahlwerkstoff)
- 4: Synchronring (Messingwerkstoff)
- 5: Mantelfläche
- 6: Reibbelag
- 7: Reibfläche
- 8: Reibfläche
- 9: Ringabschnitt
- 10: Flanschabschnitt
- 11: Durchbrechung
- 12: Durchbrechung
- 13: Reibbelag
- 14: Reibbelag
- 15: Reibfläche
- 16: Reibfläche
- 17: Einschnürung
- 18: Stirnseite
- 19: Reibkörper

- K: Kristall
- P: Partikel

## Patentansprüche

1. Synchronringpaket, umfassend wenigstens zwei Synchronringe (2, 3, 4), welche wenigstens zwei Synchronringe (2, 3, 4) über jeweils eine Reibfläche (7, 8; 15, 16) verfügen, die zur Ausbildung einer Reibpaarung in Wirkverbindung miteinander stellbar sind, wobei einer der wenigstens zwei Synchronringe (3) aus einem Stahlwerkstoff und der andere Synchronring (2, 4) aus einem Messingwerkstoff gefertigt sind, **dadurch gekennzeichnet, dass** die Reibfläche (7, 16) des Messingwerkstoffsynchronringes (2, 4) mit Ausnahme von gegebenenfalls vorhandenen, sich in axialer Richtung erstreckenden Ölnuten glatt ist und der Messingwerkstoffsynchronring (2, 4) zumindest in seinem die Reibfläche (7, 16) bildenden Abschnitt ein Gefüge aufweist, bei dem in einem kristallinen Grundmaterial geringerer Härte Partikel (P) höherer Härte eingelagert sind, und die zu dieser Reibfläche (7, 16) komplementäre Reibfläche (8, 15) der Reibpaarung des Stahlwerkstoffsynchronringes (3) durch einen Reibbelag (13, 14) aus einem organischen Bindemittel mit darin eingelagerten Füllstoffpartikeln gebildet ist, wobei die Füllstoffpartikel eine höhere Härte aufweisen als das Bindemittel.

2. Synchronringpaket nach Anspruch 1, **dadurch gekennzeichnet, dass** die Füllstoffpartikel Kurzfasern, insbesondere Carbonfasern sind.

3. Synchronringpaket nach Anspruch 2, **dadurch gekennzeichnet, dass** die Kurzfasern eine durchschnittliche Länge von etwa 0,1 mm aufweisen.

4. Synchronringpaket nach einem der Ansprüche 1 bis 3, **dadurch gekennzeichnet, dass** die in das Grundmaterial geringerer Härte eingelagerten Partikel (P) höherer Härte bei der Reibfläche (7, 16) des Messingwerkstoffsynchronringes (2, 4) einen Oberflächenanteil von mehr als 2%, insbesondere mehr als 3% auf der Reibfläche (7, 16) einnehmen.

5. Synchronringpaket nach Anspruch 4, **dadurch gekennzeichnet, dass** der Oberflächenanteil der in das Grundmaterial geringerer Härte eingelagerten Partikel (P) höherer Härte nicht mehr als 10% auf der Reibfläche (7, 16) beträgt.

6. Synchronringpaket nach einem der Ansprüche 1 bis 5, **dadurch gekennzeichnet, dass** die in das Grundmaterial geringerer Härte eingelagerten Partikel (P) höherer Härte Silizide, etwa Mn-Fe-Silizide sind.

7. Synchronringpaket nach einem der Ansprüche 1 bis 6, **dadurch gekennzeichnet, dass** das Synchronringpaket (1) drei Synchronringe (2, 3, 4) umfasst, wobei der Stahlwerkstoffsynchronring (3) der Zwischenring ist und der weitere Synchronring (2, 4) ebenfalls ein Messingwerkstoffsynchronring ist, dessen Reibfläche (7, 16) mit Ausnahme von gegebenenfalls vorhandenen, sich in axialer Richtung erstreckenden Ölnuten glatt ist und der Messingwerkstoffsynchronring (2, 4) zumindest in seinem die Reibfläche (7, 16) bildenden Abschnitt ein Gefüge aufweist, bei dem in einem kristallinen Grundmaterial geringerer Härte Partikel (P) höherer Härte eingelagert sind, und der Stahlwerkstoffsynchronring (3) eine zu der Reibfläche (7, 16) dieser weiteren Reibpaarung komplementäre Reibfläche aufweist, die durch einen Reibbelag (13, 14) aus einem organischen Bindemittel mit darin eingelagerten Füllstoffpartikeln gebildet ist, wobei die Füllstoffpartikel eine höhere Härte aufweisen als das Bindemittel.

8. Synchronringpaket nach Anspruch 7, **dadurch gekennzeichnet, dass** der Stahlwerkstoffsynchronring (3) im Bereich seines zwischen die Messingwerkstoffsynchronringe (2, 4) ragenden, die Reibbeläge (13, 14) für die beiden Reibpaarungen tragenden Ringabschnittes (9) Durchbrechungen (11, 12) aufweist.

9. Synchronringpaket nach Anspruch 8, **dadurch gekennzeichnet, dass** die Durchbrechungen (11) durch am freien Ende des Ringabschnittes (9) vorgesehene Aussparungen gebildet sind.

10. Synchronringpaket nach Anspruch 8 oder 9, **dadurch gekennzeichnet, dass** die Durchbrechungen (12) innerhalb des Ringabschnittes (9) angeordnet sind.

11. Synchronringpaket nach einem der Ansprüche 1 bis 10, **dadurch gekennzeichnet, dass** der Stahlwerkstoffsynchronring (3) im Bereich des innenliegenden Übergangs zwischen dem Ringabschnitt (9) und dem an diesem angeformten, sich radial erstreckenden Abschnitt (10) eine Einschnürung (17) aufweist.

12. Synchronringpaket nach einem der Ansprüche 1 bis 11, **dadurch gekennzeichnet, dass** der Stahlwerkstoffsynchronring (3) ein tiefgezogener Ringkörper ist.

## Claims

1. Synchronizing ring assembly, comprising at least two synchronizing rings (2, 3, 4), which at least two synchronizing rings (2, 3, 4) each have a frictional surface (7, 8; 15, 16) which can be placed into operative connection to one another to form a friction pairing, wherein one of the at least two synchronizing rings (3) is manufactured from a steel material and the other synchronizing ring (2, 4) is manufactured from a brass material, **characterized in that** the frictional surface (7, 16) of the brass-material synchronizing ring (2, 4) is smooth apart from oil grooves which are possibly present and which extend in the axial direction, and the brass-material synchronizing ring (2, 4) has, at least in the portion thereof forming the frictional surface (7, 16), a structure in which harder particles (P) are incorporated into a softer crystalline base material, and the frictional surface (8, 15) of the friction pairing of the steel-material synchronizing ring (3), which frictional surface is complementary to said frictional surface (7, 16), is formed by a friction lining (13, 14) consisting of an organic binder with filler particles incorporated therein, wherein the filler particles are harder than the binder.

2. Synchronizing ring assembly according to claim 1, **characterized in that** the filler particles are short fibers, in particular carbon fibers.

3. Synchronizing ring assembly according to claim 2, **characterized in that** the short fibers have an average length of approximately 0.1 mm.

4. Synchronizing ring assembly according to any one of claims 1 to 3, **characterized in that** the harder particles (P) incorporated into the softer base material on the frictional surface (7, 16) of the brass-material synchronizing ring (2, 4) take up a surface proportion of more than 2%, in particular more than 3%, on the frictional surface (7, 16).

5. Synchronizing ring assembly according to claim 4, **characterized in that** the surface proportion taken up by the harder particles (P) incorporated into the softer base material amounts to no more than 10% on the frictional surface (7, 16).

6. Synchronizing ring assembly according to any one of claims 1 to 5, **characterized in that** the harder particles (P) incorporated into the softer base material are silicides, for instance Mn-Fe silicides.

7. Synchronizing ring assembly according to any one of claims 1 to 6, **characterized in that** the synchronizing ring assembly (1) comprises three synchronizing rings (2, 3, 4), wherein the steel-material synchronizing ring (3) is the intermediate ring and the further synchronizing ring (2, 4) is likewise a brass-material synchronizing ring, the frictional surface (7, 16) of which is smooth apart from oil grooves which are possibly present and which extend in the axial direction, and the brass-material synchronizing ring (2, 4) has, at least in the portion thereof forming the frictional surface (7, 16), a structure in which harder particles (P) are incorporated into a softer crystalline base material, and the steel-material synchronizing ring (3) has a frictional surface which is complementary to the frictional surface (7, 16) of this further friction pairing and is formed by a friction lining (13, 14) consisting of an organic binder with filler particles incorporated therein, wherein the filler particles are harder than the binder.

8. Synchronizing ring assembly according to claim 7, **characterized in that** the steel-material synchronizing ring (3) has apertures(11, 12) in the region of its ring section (9) which protrudes between the brass-material synchronizing rings (2, 4) and carries the friction linings (13, 14) for the two friction pairings.

9. Synchronizing ring assembly according to claim 8, **characterized in that** the apertures(11) are formed by cutouts provided at the free end of the ring section (9).

10. Synchronizing ring assembly according to claim 8 or 9, **characterized in that** the apertures(12) are arranged within the ring section (9).

11. Synchronizing ring assembly according to any one of claims 1 to 10, **characterized in that** the steel-material synchronizing ring (3) has a narrowing (17) in the region of the inner transition between the ring section (9) and the portion (10) integrally formed thereon and extending radially.

12. Synchronizing ring assembly according to any one of claims 1 to 11, **characterized in that** the steel-material synchronizing ring (3) is a deep-drawn annular body.

## Revendications

1. Ensemble de bagues de synchronisation comprenant au moins deux bagues de synchronisation (2, 3, 4), lesquelles au moins deux bagues de synchronisation (2, 3, 4) disposent chacune d'une surface de frottement (7, 8 ; 15, 16), pouvant être positionnées l'une par rapport à l'autre par une liaison active afin de réaliser un accouplement par friction, l'une des au moins deux bagues de synchronisation (3) étant fabriquée dans un matériau en acier et l'autre bague de synchronisation (2, 4), dans un matériau en laiton, **caractérisé en ce que** la surface de friction (7, 16) de la bague de synchronisation en laiton (2, 4), à l'exception de rainures de graissage éventuellement présentes qui s'étendent dans le sens axial, est lisse et la bague de synchronisation en laiton (2, 4) présente au moins sur son tronçon formant la surface de friction (7, 16), une structure dans laquelle des particules (P) de dureté supérieure sont intégrées dans un matériau de base cristallin de dureté inférieure et la surface de friction (8, 15) complémentaire à cette surface de friction (7, 16) destinée à l'accouplement par friction de la bague de synchronisation en acier (3), est formée par un revêtement de friction (13, 14) constitué d'un liant organique comportant des particules de charge intégrées, lesquelles particules de charge présentant une dureté supérieure à celle du liant.

2. Ensemble de bagues de synchronisation selon la revendication 1, **caractérisé en ce que** les particules de charge sont des fibres courtes, notamment des fibres de carbone.

3. Ensemble de bagues de synchronisation selon la revendication 2, **caractérisé en ce que** les fibres courtes ont une longueur moyenne d'environ 0,1 mm.

4. Ensemble de bagues de synchronisation selon l'une des revendications 1 à 3, **caractérisé en ce que** les particules (P) de dureté supérieure intégrées dans le matériau de base de dureté inférieure occupent sur la surface de friction (7, 16) de la bague de synchronisation en laiton (2, 4) une proportion en surface de plus de 2 % et notamment de plus de 3 % de la surface de friction (7, 16).

5. Ensemble de bagues de synchronisation selon la revendication 4, **caractérisé en ce que** la proportion en surface de particules (P) de dureté supérieure intégrées dans le matériau de base de dureté inférieure ne représente pas plus de 10 % de la surface de friction (7, 16).

6. Ensemble de bagues de synchronisation selon l'une des revendications 1 à 5, **caractérisé en ce que** les particules (P) de dureté supérieure intégrées dans le matériau de base de dureté inférieure sont des siliciures, par exemple des siliciures Mn-Fe.

7. Ensemble de bagues de synchronisation selon l'une des revendications 1 à 6 **caractérisé en ce que** l'ensemble de bagues de synchronisation (1) comprend trois bagues de synchronisation (2, 3, 4), la bague de synchronisation en acier (3) étant la bague intermédiaire et l'autre bague de synchronisation (2, 4) étant également une bague de synchronisation en laiton, dont la surface de friction (7, 16), à l'exception des rainures de graissage éventuellement présentes qui s'étendent dans le sens axial, est lisse et la bague de synchronisation en laiton (2, 4) présente au moins sur son tronçon formant la surface de friction (7, 16), une structure dans laquelle des particules (P) de dureté supérieure sont intégrées dans un matériau de base cristallin de dureté inférieure et la bague de synchronisation en acier (3) présente une surface de friction complémentaire à la surface de friction (7, 16) de cet accouplement supplémentaire par friction qui est formé par un revêtement de friction (13, 14) constitué d'un liant organique comportant des particules de charge intégrées, lesquelles particules de charge présentant une dureté supérieure à celle du liant.

8. Ensemble de bagues de synchronisation selon la revendication 7, **caractérisé en ce que** la bague de synchronisation en acier (3) présente des percées (11, 12) dans la zone de son tronçon (9) de bague en saillie entre les bagues de synchronisation en laiton (2, 4), supportant les revêtements de friction (13, 14) pour les deux accouplements par friction.

9. Ensemble de bagues de synchronisation selon la revendication 8, **caractérisé en ce que** les percées (11) sont formées par des évidements prévus sur l'extrémité libre du tronçon (9) de bague.

10. Ensemble de bagues de synchronisation selon la revendication 8 ou 9, **caractérisé en ce que** les percées (12) sont agencées à l'intérieur du tronçon (9) de bague.

11. Ensemble de bagues de synchronisation selon l'une des revendications 1 à 10, **caractérisé en ce que** la bague de synchronisation en acier (3) présente un resserrement (17) dans la zone de la transition interne entre le tronçon (9) de bague et le tronçon (10) moulé sur ce dernier, s'étendant radialement.

12. Ensemble de bagues de synchronisation selon l'une des revendications 1 à 11, **caractérisé en ce que** la bague de synchronisation en acier (3) est un corps annulaire embouti.
